# EUROPÄISCHE PATENTSCHRIFT

(11) **EP 0 647 494 B1**
(45) Veröffentlichungstag und Bekanntmachung des Hinweises auf die Patenterteilung: **28.07.1999**
(21) Anmeldenummer: 94114899.1
(22) Anmeldetag: 22.09.1994
(51) Int. Cl.: B23K 1/00

(54) **Vorrichtung zum Herstellen gelöteter mehrlagiger Metallrohre**
Multi-layer soldered metal tubes producing apparatus
Système de fabrication de tubes multicouches brasés

(30) Priorität: 30.09.1993 DE 4333036
(43) Veröffentlichungstag der Anmeldung: 12.04.1995
(73) Patentinhaber: Siebe Automotive (Deutschland) GmbH, 89601 Schelklingen (DE)
(72) Erfinder: Vellmer, Carl Heinz, D-59846 Sundern (DE); Mänken, Udo, D-42281 Wuppertal (DE)
(74) Vertreter: Liebau, Gerhard, Dipl.-Ing.

(56) Entgegenhaltungen:
- EP-A- 0 036 968
- DE-A- 2 425 349
- DE-A- 2 517 248

## Beschreibung

Die Erfindung betrifft eine Vorrichtung zum Herstellen gelöteter mehrlagiger Metallrohre entsprechend dem Oberbegriff des Anspruchs 1.

Eine solche Vorrichtung ist in der EP 0 036 968 B1 beschrieben.

Bei der bekannten Vorrichtung gemäß der EP 0 036 968 B1 wird die gesamte konduktive Erwärmungszone zum kontinuierlichen Aufheizen auf Löttemperatur des sich mit Rohrvorschubgeschwindigkeit bewegenden mehrlagigen, insbesondere zweilagigen, Rohrkörpers, durch zwei elektrische Einspeisungsstellen begrenzt. Die bezüglich der Rohrförderrichtung stromaufwärts gelegene erste Einspeisungsstelle besteht aus einem parallel zur Längsachse des Rohrkörpers in Axialrichtung verstellarretierbaren Kontaktschuh. Demgegenüber stromabwärts angeordnet ist eine Wärme- bzw. Lötkammer mit Schutzgasatmosphäre, in welcher sich die Lötzone befindet. In jener Lötkammer ist auch die zweite elektrische Einspeisungsstelle angeordnet, welche aus einem durch die Rohrvorschubbewegung drehangetriebenen Kontaktrollenpaar besteht, dessen Kontaktrollen zur Gewährleistung eines guten elektrischen Kontakts am Außenumfang ringförmige Auskehlungen mit jeweils teilkreisförmigem Querschnitt (Kaliber) besitzen. Die Kontaktrollen dienen am Ende der Glühzone, in welcher sich das Lot, insbesondere das Kupferlot, verflüssigt, neben ihrer elektrischen Kontaktfunktion zugleich dem Zusammenhalt des Rohrkörpers, bevor sich dieser zu einem nach Kühlung verfestigten gelöteten Mehrlagen-Stahlrohr, insbesondere Zweilagen-Stahlrohr, stabilisiert hat.

Bei der gemäß der EP 0 036 968 vorbekannten Vorrichtung ist es wesentlich, den stromaufwärts gelegenen Kontaktschuh mit der ersten elektrischen Einspeisungsstelle zu verschieben, um hierdurch die Länge der Glühzone einstellen zu können. Hierbei sind die beiden elektrischen Einspeisungsstellen an eine heruntertransformierte Wechselspannung angeschlossen.

In der EP 0 036 968 ist auch die Rollvorrichtung zur stufenweisen bildsamen Umformung eines ebenen streifenartigen Metallbandes auf dem Weg über ein Schlitzrohr bis zu einem zunächst unverlöteten zweilagigen Rohrkörper im einzelnen beschrieben. Hierzu ist eine Rohrwalzvorrichtung mit einzelnen Walzgerüsten, die jeweils ein Formrollenpaar enthalten, vorgesehen. Das bezüglich der Rohrvorschubrichtung am weitesten stromabwärts gelegene Formrollenpaar, welches den fertiggewalzten mehrlagigen - aber noch unverlöteten - Rohrkörper umgreift, umschließt in derselben Querschnittsebene auch einen Kalibrierdorn, den sogenannten Schwimmer. Dieser Schwimmer bildet einen rotationssymmetrischen Kalibrierkörper mit geschmeidigen Übergängen, welcher, stromabwärts weisend, am freien Ende einer Schleppstange befestigt ist, die gegenüber dem Schwimmer einen geringeren Durchmesser aufweist. Das raumfest gehaltene Ende der Schleppstange ist gegenüber dem Schwimmer stromaufwärts aus dem Schlitzrohrbereich des Rohrkörpers nach außen geführt und dort befestigt.

Eine andere Vorrichtung zum Herstellen gelöteter mehrlagiger Metallrohre ist in der DE 886 945 beschrieben. Dort sind von drei Kontaktrollenpaaren die beiden stromaufwärts angeordneten Kontaktrollenpaare unabhängig voneinder in Axialrichtung verschieblich (vgl. Abb. 3, 4, 7, 24, 27; 8, 9, 23; 22, 21). Der DE 886 945 sind jedoch keine näheren Erläuterungen bezüglich des Rohrwalzwerks zu entnehmen. Ebenso wie bei der Vorrichtung der eingangs erwähnten Gattung (EP 0 036 968 B1) werden auch die elektrischen Einspeisungsstellen gemäß der DE 886 945 mit heruntertransformierter einphasiger Wechselspannung (vgl. Abb. 2 Pos. 6) beaufschlagt.

Die Vorrichtung gemäß der EP 0 036 968 B1 hat sich in der Praxis vorzüglich bewährt, zumal es mit jener bekannten Vorrichtung erstmals möglich wurde, in einfacher Weise ein Durchlauf-Lötverfahren trotz Toleranzen beim unverlöteten Rohrkörper zu realisieren.

Die Vorrichtung gemäß der EP 0 036 968 wird indes als verbesserungsbedürftig empfunden, da die bekannte Vorrichtung keine Leistungssteigerung mehr zuläßt.

Ausgehend von der eingangs beschriebenen bekannten Vorrichtung gemäß der EP 0 036 968 B1, liegt der Erfindung die Aufgabe zugrunde, die bekannte Vorrichtung unter weitestgehender Beibehaltung ihrer einfachen Bauform so zu verändern und weiterzuentwickeln, daß sie eine wesentliche Leistungssteigerung zuläßt.

Entsprechend der Erfindung wird diese Aufgabe dadurch gelöst, daß das Formrollenpaar, welches den unverlöteten mehrlagigen Rohrkörper und auch den Schwimmer umgreift, zugleich das stromaufwärts angeordnete erste Kontaktrollenpaar mit der den Beginn der Erwärmungszone darstellenden ersten elektrischen Einspeisungsstelle bildet, daß ein bezüglich des ersten Kontaktrollenpaares stromabwärts angeordnetes zweites Kontaktrollenpaar, welches die zweite elektrische Einspeisungsstelle und zugleich das Ende der Erwärmungszone bildet, mit einem Eigenantrieb versehen ist, und eine größere Umfangsgeschwindigkeit als das erste Kontaktrollenpaar aufweist, und daß die Fördergeschwindigkeit der Rohrfördervorrichtung in Abhängigkeit von der im Bereich des zweiten Kontaktrollenpaares herrschenden Rohrvorschubgeschwindigkeit einstellbar ist.

Die erfindungsgemäße Vorrichtung gestattet ein Mehrfaches der mit der gattungsgemäßen bekannten Vorrichtung (EP 0 036 968) möglichen Arbeitsleistung.

Dies ist zunächst dadurch möglich geworden, daß das Formrollenpaar, welches den unverlöteten mehrlagigen Rohrkörper und auch den Schwimmer umgreift, zugleich das stromaufwärts angeordnete erste Kontaktrollenpaar mit der den Beginn der Erwärmungszone darstellenden ersten elektrischen Einspeisungsstelle bildet. Dieses erfindungsgemäße Merkmal gestattet zunächst eine einfache Bauform, da das vorhandene, am weitesten stromabwärts gelegene Walzgerüst neben einer Funktion einer bildsamen Formgebung die zusätzliche Funktion einer elektrischen Einspeisungsstelle erhält. Eine Besonderheit liegt darin, daß die Erfindung erkannt hat, daß der vom Formrollenkaliber über den mehrlagigen Rohrkörper auf den Schwimmer ausgeübte, radial nach innen wirkende Normaldruck zugleich als Kontaktdruck zur Einleitung elektrischer Energie in den Mehrlagenrohrkörper hinein genutzt wird. Durch diese erste elektrische Einspeisungsstelle ist daher die Voraussetzung zu einer optimalen elektrischen Kontaktgestaltung gegeben, so daß die elektrische Energie über die gesamte Querschnittsfläche des mehrlagigen, insbesondere zweilagigen, Rohrkörpers in letzteren eingeleitet werden kann, was eine entscheidende Voraussetzung zur Vergrößerung der Arbeitsleistung und für ein einwandfreies Arbeitsergebnis darstellt.

Die Nutzung des am weitesten stromabwärts angeordneten Walzgerüstes als erste elektrische Einspeisungsstelle beruht weiterhin auf der Erkenntnis, daß das erhitzte Mehrlagenrohr ein äußerst labiles Gebilde darstellt, welches möglichst wenig mechanisch kontaktiert werden sollte, um eine Deformierung, und damit einen Rohrfehler (Fehllötung, Maßfehler), des gewickelten Rohrkörpers zu vermeiden. Auch aus dieser Sicht ist die Verwendung des vorhandenen Walzgerüstes als elektrische Einspeisungsstelle äußerst vorteilhaft, da der noch unverlötete mehrlagige Rohrkörper im ringförmigen Walzspalt zwischen Schwimmer und den beiden Formrollen keiner radialen Lageänderung unterworfen ist.

Ein weiteres wesentliches Erfindungsmerkmal besteht darin, daß das bezüglich des ersten Kontaktrollenpaares stromabwärts angeordnete zweite Kontaktrollenpaar, welches die zweite elektrische Einspeisungsstelle und zugleich das Ende der Erwärmungszone bildet, mit einem Eigenantrieb versehen ist und eine größere Umfangsgeschwindigkeit als das erste Kontaktrollenpaar aufweist. Unter dem Begriff "Eigenantrieb" ist beispielsweise ein von einem Getriebe abgeleiteter Antrieb zu verstehen, und zwar im Unterschied zu den bislang beim Stand der Technik üblichen Kontaktrollen, die nur durch die Rohrförderbewegung mitschleppend gedreht wurden.

Die größere Umfangsgeschwindigkeit des zweiten Kontaktrollenpaares schafft die erfindungsgemäße Möglichkeit, die mit der Erwärmung des Rohrkörpers einhergehende thermische Längenänderung zu berücksichtigen, um so einen Durchhang des Rohrkörpers zwischen den elektrischen Einspeisungsstellen, verbunden mit der Einleitung von schädlichen Querschwingungen, zu vermeiden. In diese vorteilhafte Richtung wirkt auch das weitere Erfindungsmerkmal, wonach die Fördergeschwindigkeit der Rohrfördervorrichtung in Abhängigkeit von der im Bereich des zweiten Kontaktrollenpaares herrschenden Rohrvorschubgeschwindigkeit einstellbar ist.

Von der DE 886 945 (vgl. dort Seite 4 Zeilen 44-54) ist die Möglichkeit bekannt, durch einen etwas schnelleren Lauf der elektrischen Kontaktrollenpaare, als es der Fördergeschwindigkeit des Rohrkörpers entspricht, eine reibende Tätigkeit der Kontaktrollen auf der Rohroberfläche auszuüben. Diese Art des Kontaktrollenantriebs mag zwar für gewisse Anwendungsfälle gangbar sein, während bei anderen Anwendungsfällen durch die reibende Tätigkeit der Kontaktrollen auf der Rohroberfläche eine Einleitung von schädlichen Vibrationen nicht auszuschließen ist. Für die größte Anzahl der möglichen Anwendungsfälle hat sich entsprechend der Erfindung eine Ausführungsform als zweckmäßig erwiesen, wonach die Kontaktrollenpaare und die Rohrförderung die Außenfläche des Rohres schlupffrei, zumindest aber im wesentlichen schlupffrei, angreifen, um auf diese Weise unter Vermeidung von schädlichen Vibrationen eine durchhang- und schwingungsfreie Rohrführung durch die Erwärmungszone hindurch zu gewährleisten.

In weiterer Ausgestaltung der Erfindung ist im beiderseitigen Abstand zwischen dem ersten Kontaktrollenpaar und dem zweiten Kontaktrollenpaar ein einen Eigenantrieb aufweisendes mittleres Kontaktrollenpaar mit einer mittleren elektrischen Einspeisungsstelle vorgesehen, wobei die Vorwärmzone zwischen der ersten und der mittleren Einspeisungsstelle und die Glühzone zwischen der mittleren und der zweiten Einspeisungsstelle angeordnet sind. Drei im Abstand voneinander angeordnete Kontaktrollenpaare sind von der DE 886 945 (vgl. Abb. 1 und 2) grundsätzlich bekannt. Der Vorteil einer solchen Anordnung besteht hauptsächlich in der günstigeren, sich auf drei Kontaktrollenpaare aufteilenden elektrischen Einspeisung und in der Möglichkeit, die Vorwärmzone durch Veränderung des Abstandes zwischen dem ersten und dem mittleren Kontaktrollenpaar optimieren zu können. Diese Änderung des Abstandes benötigt die Erfindung regelmäßig nur bei der Erstinstallation bzw. Erstmontage der Verrichtung. Eine betriebsmäßige Änderung jenes Abstandes zur Berücksichtigung von z.B. rohrfehlerbedingten Massenschwankungen benötigt die erfindungsgemäße Verrichtung im Gegensatz zum Bekannten (EP 0 036 968 B1) nicht. Dies kommt durch die weiteren Erfindungsmerkmale zum Ausdruck, wonach alle Kontaktrollenpaare bezüglich der Längsachse des Rohrkörpers unverschieblich sind.

Von der DE 886 945 ist es bekannt, die Einspeisungsstellen mit Wechselstrom zu beaufschlagen und hierbei Vorwärmzone und Glühzone parallel zu schalten. Demgegenüber ist es zur Erzielung einer größeren Arbeitsleistung in weiterer Ausgestaltung der Erfindung vorteilhafter, die Einspeisungsstellen mit Gleichstrom zu beaufschlagen und hierbei Vorwärmzone und Glühzone parallel zu schalten. Hierbei sind entsprechend zusätzlichen Erfindungsmerkmalen zur Regelung der den Einspeisungsstellen zugeführten elektrischen Leistung sowohl die elektrische Spannung als auch der elektrische Strom veränderbar.

Als besonders vorteilhaft zur Regelung der Anfahrphase und auch zur Korrektur der Betriebszustände hat sich hierbei eine erfindungsgemäße Ausführungsform bewährt, wonach zur Versorgung der Einspeisungsstellen mit geregelter elektrischer Leistung jeder Phase eines elektrischen Drehstromtransformators eine leistungsregelbare Thyristoranordnung primärseitig vorgeschaltet ist, daß sekundärseitig jeder einzelnen Phase eine Gleichrichteranordnung nachgeschaltet ist und daß die drei Gleichstromphasen zur Beaufschlagung der Einspeisungsstellen auf zwei Anschlußklemmen zusammengeschaltet sind. Der Vorteil der vorbeschriebenen erfindungsgemäßen elektrischen Leistungsregelung besteht darin, daß auf eine Axialverschiebung der Kontaktrollenpaare gänzlich verzichtet werden kann, insbesondere wenn die Vorwärmzone zwischen erstem Kontaktrollenpaar und mittlerem Kontaktrollenpaar für einen bestimmten Rohrtyp erst einmal eingestellt ist, wobei letzteres bereits bei der Erstmontage der Vorrichtung geschieht. Die Leistungsregelung in Abhängigkeit von Rohrtoleranzen und der Rohrvorschubgeschwindigkeit kann sodann entsprechend der Erfindung ausschließlich über die leistungsregelbare Thyristoranordnung primärseitig des Transformators erfolgen.

Von der Broschüre "Konduktive Erwärmung von Metallen", herausgegeben 1989 von der Rheinisch-Westfälisches Elektrizitätswerk Aktiengesellschaft, (s. dort Seiten 15 und 16 in Zusammenhang mit Bild 37) ist es bekannt, in Verbindung mit einer Draht-Durchlaufglühe eine elektrische Leistungsregelung auf der Starkstromseite über Thyristoren sowie die Nachschaltung eines Drehstromtransformators und einer Gleichrichtung vorzusehen. Jedoch werden im Unterchied zur Erfindung bei der vorbekannten gattungsfremden Draht-Durchlaufglühe über unterschiedliche Spannungen unterschiedliche elektrische Leistungen über die Drahtglühstrecke eingespeist. Für die Erfindung hingegen ist es wesentlich, daß die drei Gleichstromphasen zur Beaufschlagung der Einspeisungsstellen für die einander parallelgeschalteten beiden Rohrstrecken (Vorwärmzone und Glühzone) auf zwei Klemmen zusammengeschaltet sind.

Weitere Erfindungsmerkmale ergeben sich aus zusätzlichen Unteransprüchen.

In den Zeichnungen ist ein bevorzugtes Ausführungsbeispiel entsprechend der Erfindung näher dargestellt,

Es zeigen
Fig. 1 eine perspektivische Teilansicht eines zweilagigen kupfergelöteten Stahlrohres,
Fig. 2 einen bezüglich der Rohrvorschub- bzw. Förderflußrichtung stromaufwärts sowie
Fig. 3 den dazugehörigen, aus zeichnerischen Gründen abgetrennten stromabwärts angeordneten Teil einer Vorrichtung zur Herstellung von gelöteten mehrlagigen Stahlrohren, jeweils in mehr schematischer Darstellung, und
Fig. 4 ein Schema der elektrischen Energieeinspeisung.

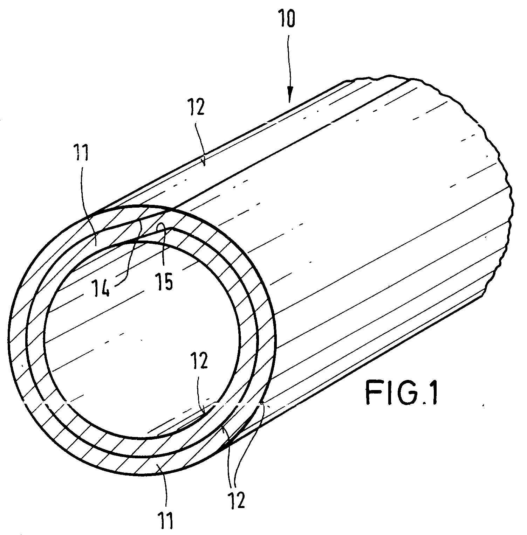

In Fig. 1 ist ein kupfergelötetes Zweilagen-Stahlrohr mit der Bezugsziffer 10 versehen. Die beiden Stahlband-Lagen sind mit der Bezugsziffer 11 und die Kupferschichten bzw. Kupferlagen (dick durchgezogene Linien) sind mit der Bezugsziffer 12 bezeichnet.

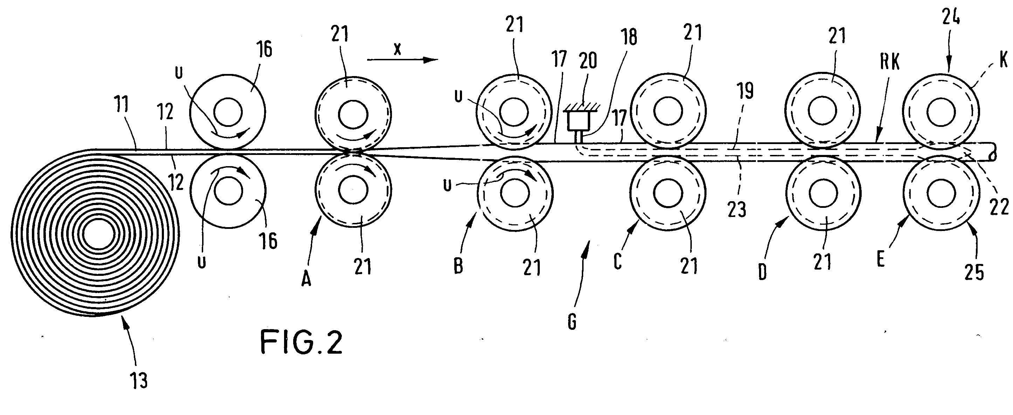

Das Ausgangsmaterial zu dem in Fig. 1 dargestellten kupfergelöteten Zweilagen-Stahlrohr ist ein beidseitig mit je einer galvanisch aufgebrachten Kupferschicht 12 versehenes Stahlband 11, welches ein Coil 13 gemäß Fig. 2 bildet.

Aus Fig. 1 ist im übrigen ersichtlich, daß das Bandmaterial an den Stellen 14 und 15 zur Erzielung eines gleichmäßig gerundeten Rohrkörpers je eine Abschrägung aufweist.

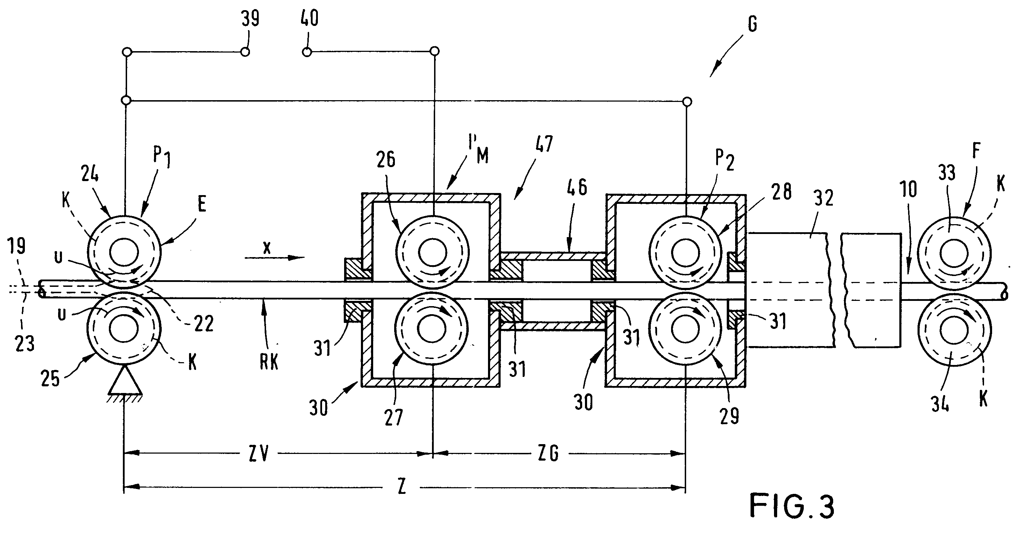

Die Vorrichtung sei nun anhand der Fig. 2 und 3 wie folgt beschrieben:

Zwei Abzugsrollen 16 ziehen das kupferbeschichtete Stahlband 11, 12 von dem auf nicht dargestellte Weise drehgelagerten Coil 13 ab, bewegen demnach das kupferbeschichtete Band 11, 12 in Vorschub- bzw. Förderflußrichtung x.

In den Walzgerüsten A und B wird das kupferbeschichtete Stahlband 11, 12 sodann zu einem Schlitzrohr mit nach oben weisendem Schlitz 17 bildsam kalt verformt. Durch den Schlitz 17 greift ein an seinem Ende 18 bei 20 raumfest gehaltener Dorn 19 in das Innere des Schlitzrohres ein und erstreckt sich in der Vorschubrichtung x über die Walzgerüste C, D und E.

Bezüglich der Förderflußrichtung x entsteht so hinter dem Walzgerüst E ein Rohrkörper RK, der der Fig. 1 bereits entspricht, mit dem Unterschied allerdings, daß er noch nicht verlötet ist.

Die Formrollen der Walzgerüste A-D sind, obwohl sie hinsichtlich ihres Kalibers unterschiedlich gestaltet sind, allgemein mit der Bezugsziffer 21 und deren Umlaufrichtung mit u bezeichnet.

Der Dorn 19 weist an seinem freien Ende den eigentlichen Dornbereich, nämlich einen Kaliberdorn, den sogenannten Schwimmer 22, auf. Der Schwimmer 22 stellt einen rotationssymmetrischen Körper mit entlang der Richtung x geschmeidig verlaufender balliger Längskontur dar. Der Dorn 19 weist außerdem eine Schleppstange 23 auf, an deren stromabwärts weisendem freien Ende der Schwimmer 22 befestigt ist. Der Schwimmer 22 weist einen größeren Außendurchmesser als die Schleppstange 23 auf.

Die beiden Formrollen 24, 25 des Formrollenpaares 24, 25 des am weitesten stromabwärts angeordneten Walzgerüstes E bilden ein Kaliber K, welches im Querschnitt eine etwa halbkreisförmig profilierte Rinne am Außenumfang der Formrollen 24, 25 darstellt.

In der Zeichnung gemäß Fig. 3, die eine Fortsetzung der Darstellung gemäß Fig. 2 bildet, sind die Formrollen 24, 25 des stromabwärts letzten Walzgerüstes E wegen des besseren Verständnisses noch einmal dargestellt. Die Vorrichtung zur Herstellung eines kupfergelöteten Zweilagen-Stahlrohres 10 ist insgesamt mit G bezeichnet.

Die Vorrichtung G weist eine erste elektrische Einspeisungsstelle P1, eine zweite elektrische Einspeisungsstelle P2 und eine mittlere elektrische Einspeisungsstelle PM auf.

Die erste elektrische Einspeisungsstelle P1 ist von dem Formrollenpaar 24, 25 des Walzgerüstes E gebildet, welches demnach neben der Funktion einer bildsamen Formgebung auch die Funktion elektrischer Kontaktrollen erfüllt. Die Formrollen 24, 25 pressen zwischen sich den zweilagigen Rohrkörper (im wesentlichen entsprechend Fig. 1) gegen den Schwimmer 22 ringförmig zusammen, so daß an dieser Stelle ein optimaler elektrischer Kontakt zwischen den Formrollen 24, 25 und den innen am Schwimmer 22 widergelagerten doppellagigen Rohrkörper RK besteht.

Der ersten Einspeisungsstelle P1 benachbart, jedoch von dieser stromabwärts in Richtung x distanziert, ist die mittlere Einspeisungsstelle PM mit zwei Kontaktrollen 26, 27 angeordnet. Diese ebenfalls aus einem geeigneten Metall, zweckmäßig aus Stahl, bestehenden Kontaktrollen 26, 27 weisen jeweils bei Berücksichtigung der Wärmedehnung der Lötzone ein mit den Formrollen 24, 25 im wesentlichen identisches halbkreisförmiges Kaliber auf. Die Kontaktrollen 26, 27 kontaktieren demnach die kreisförmige Oberfläche des Rohrkörpers RK satt.

Analog wie die Kontaktrollen 26, 27 sind die Kontaktrollen 28, 29 ausgebildet, welche die zweite elektrische Einspeisungsstelle P2 darstellen.

Die Kontaktrollen 26, 27; 28, 29 befinden sich in einer Wärme- bzw. Lötkammer 47, welche aus zwei Einzellötkammern 30 und einem dazwischen dichtend angeordneten Verbindungsrohr 46 besteht. Der Innenraum der Lötkammer 47 enthält eine Schutzgasatmoshäre, insbesondere ein Gemisch aus Wasserstoff und Stickstoff, zur Verhinderung einer Oxydation des Rohrkörpers RK. Die besondere Ausbildung der Lötkammer 47, d.h. deren Aufgliederung in die drei Einzelbereiche 30, 46, 30, ermöglicht eine vorteilhafte Reduzierung des Schutzgasvolumens.

Die Eingänge und die Ausgänge der Einzellötkammern 30 bilden jeweils Bundbuchsen 31 aus geeignetem Werkstoff.

Stromabwärts schließt sich an die Lötkammer 47 eine kühlmitteldurchströmte, insbesondere wasserdurchströmte, langgestreckte Kühlkammer 32 an, die aus Gründen einer Zeichnungsvereinfachung nur abgebrochen teilweise dargestellt ist.

Stromabwärts hinter der Kühlkammer 32 befindet sich eine Rohrfördervorrichtung F, welche beim gezeigten Ausführungsbeispiel zwei mit den Kontaktrollen 26, 27 bzw. 28, 29 identische Stahlrollen 33, 34 aufweist, deren Kaliber K die kreisförmige Oberfläche des fertigen doppellagigen Stahlrohres 10 satt und fest angreifen und einer nicht dargestellten Coil-Vorrichtung zufördern.

In Fig. 3 ist auch kenntlich gemacht, daß die Einspeisungsstellen P1 und PM zwischen sich eine Vorwärmzone ZV bilden.

Die Glühzone ZG besteht zwischen der mittleren elektrischen Einspeisung PM und der zweiten elektrischen Einspeisung P2. Hierbei befindet sich die eigentliche helleuchtende Glühstrecke, in welcher der Rohrkörper eine Temperatur von etwa 1150° C annimmt und die Verlötung stattfindet, innerhalb der Lötkammer 30.

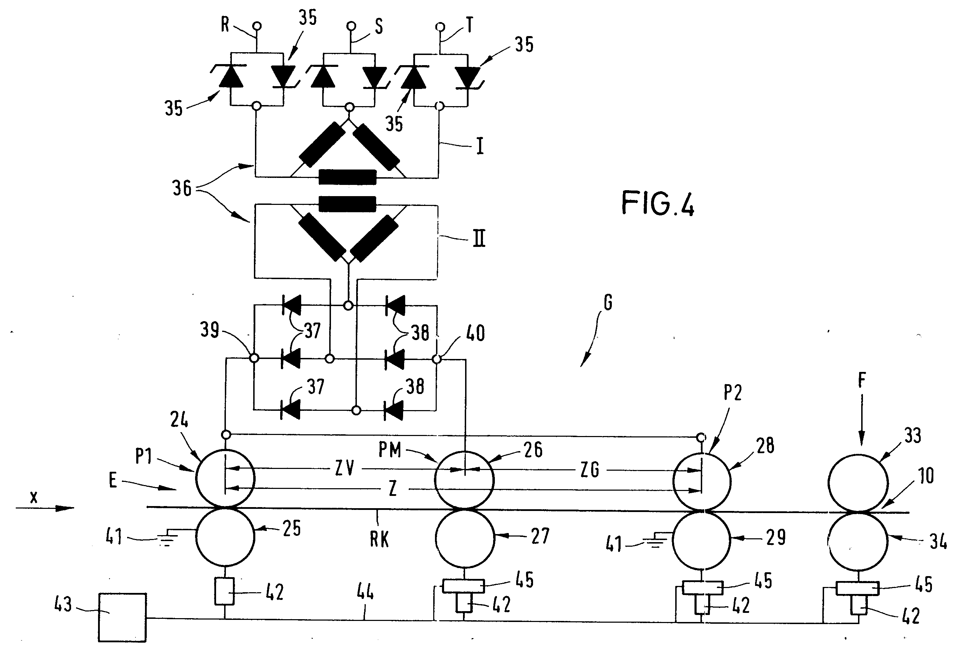

Wie im einzelnen noch anhand von Fig. 4 dargelegt wird, weisen nicht nur die Formrollen 24, 25 (wie im übrigen auch alle übrigen Formrollen 21 der Walzgerüste A-D), sondern auch die Kontaktrollenpaare 26, 27 sowie 28, 29 und das Förderrollenpaar 33, 34 besondere Eigenantriebe auf.

Die elektrisch wirksamen Rohrzonen ZV und ZG sind einander parallelgeschaltet, wie noch im einzelnen anhand von Fig. 4 dargelegt wird.

Die Versorgung der Vorrichtung G mit elektrischer Leistung geht aus von einem Drehstromnetz mit den Phasen R, S, T. Zwischen den Phasen herrscht eine Spannung von 380 V.

Jede Phase enthält eingangs eine Leistungsregelung in Form von jeweils zwei antiparallelgeschalteten Thyristoren bzw. Thyristorgruppen 35. Die drei leistungsgeregelten Phasen R, S, T sind der Primärseite I eines im Dreieck geschalteten Drehstromtransformators 36 aufgeschaltet, dessen Sekundärseite II für jede Phase eine Gleichrichteranordnung 37, 38 nachgeschaltet ist. Alle jeweils eine Gleichrichteranordnung 37, 38 enthaltenden, zueinander phasenverschobenen Gleichspannungsleistungen sind gemeinsam in zwei Anschlußklemmen 39, 40 zusammengeschaltet. Diese Anschlußklemmen 39, 40 liefern demnach eine zwar pulsierende, wegen der drei Phasen indes hinreichend glatte Gleichspannungsleistung mit einer mittleren Spannung von etwa 50 V, die vorzugsweise die Maximalspannung ist.

Zu den Anschlußklemmen 39, 40 sind parallelgeschaltet die elektrisch wirksamen Rohrstrecken ZV und ZG. Die gesamte Erwärmungszone trägt die Bezugsziffer Z. Obwohl im einzelnen nicht dargestellt, sind jeweils beide Rollen 24, 25 bzw. 26, 27 oder 28, 29 der elektrischen Einspeisungsstelle P1, PM und P2 mit den Anschlußklemmen 39, 40 elektrisch verbunden. Die Rollenanordnungen 24, 25 sowie 28, 29 sind darüber hinaus bei 41 elektrisch geerdet.

Die Formrollen 24, 25 des am weitesten stromabwärts angeordneten Walzgerüstes E besitzen einen eigenen Antrieb, beispielsweise über Kardanwellen des Walzwerksgetriebes. Die Formrollen 24, 25 sind daher drehstarr miteinander verbunden. Die Formrolle 25 kann beispielsweise einen elektrischen Tachometer 42 treiben, welcher über ein vieladriges elektrisches Kabel 44 mit einem Schaltschrank 43 verbunden ist. Die Kontaktrollenpaare 26, 27; 28, 29 sowie das Förderrollenpaar 33, 34 der Rohrfördervorrichtung F sind jeweils mit einem elektrischen Motor 45 getrieblich verbunden. Auf jeder Motorwelle ist ebenfalls ein elektrischer Tachometer 42 angeordnet. Sowohl die Motoren 45 als auch die elektrischen Tachometer 42 sind über das vieladrige Kabel 44 mit dem Schaltschrank 43 verbunden, so daß sich insgesamt eine an sich bekannte Servoregelung ergibt.

Im Betrieb der Vorrichtung G wird die Drehzahl der Formrollenpaare 24, 25 über den elektrischen Tachometer 42 als hauptsächliche Bezugsgröße an den Rechner des Schaltschranks 43 weitergegeben. Dieser vergleicht die von den übrigen elektrischen Tachometern 42 der Kontaktrollenpaare 26, 27 sowie 28, 29 sowie der Förderrollenpaare 33, 34 abgegebenen elektrischen Signale miteinander und regelt daraufhin die Drehzahl der einzelnen Motoren 45 durch Ist/Sollwert-Vergleich derart, daß alle im Förderfluß nachgeschalteten Rollen 26, 27 sowie 28, 29 auf dem Rohrkörper RK bzw. die Stahlrollen 33, 34 auf dem Zweilagenrohr 10 schlupffrei laufen.

Die Kontaktrollen 26, 27 sowie 28, 29 und die Förderrollen 33, 34 sind in nicht gezeigter Weise bewegungseinheitlich über ein entsprechendes Getriebe, beispielsweise über ein Zahnriemengetriebe, miteinander verbunden.

Es ist wichtig zu erwähnen, daß die Regelung der elektrischen Leistung zur Beaufschlagung der Einspeisungsstellen P1, PM und P2 sowohl beim Anfahren der Vorrichtung G als auch zur Aufrechterhaltung eines gleichmäßigen Betriebszustandes allein über die einstellbaren Transistoranordnungen 35 primärseitig des Transformators 36 erfolgt.

Die Regelung der Umlaufgeschwindigkeiten der Kontaktrollenpaare 26, 27 sowie 28, 29 und des Förderrollenpaares 33, 34 ist über den Schaltschrank 43 elektrisch verriegelt (was an sich bekannt ist), so daß eine individuelle Verstellung der Umlaufgeschwindigkeit irgendeines Rollenpaares 26, 27; 28, 29 und 33, 34 nur mittels eines gesonderten Eingriffs geschehen kann.

## Patentansprüche

1. Vorrichtung zum Herstellen gelöteter mehrlagiger Metallrohre (10), mit einer mehrere Formrollenpaare aufweisenden Rollvorrichtung zur stufenweisen bildsamen Umformung eines ebenen streifenartigen Metallbandes (11) auf dem Weg über ein Schlitzrohr bis zu einem zunächst unverlöteten mehrlagigen Rohrkörper, welcher in einer Querschnittsebene des ihn umgreifenden Formrollenpaares einen Kalibrierdorn, den sogenannten Schwimmer (22), umschließt, welcher, bezüglich der Rohrvorschubrichtung stromabwärts weisend, am freien Ende einer aus dem Schlitzrohr herausgeführten, raumfest gehaltenen Schleppstange (23) befestigt ist, und mit im Axialabstand voneinander angeordneten, Kontaktrollen aufweisenden elektrischen Einspeisungsstellen einer konduktiven Erwärmungszone, die eine Vorwärmzone (ZV) und eine sich daran stromabwärts anschließende Glühzone (ZG) aufweist, auf welche eine Kühlstrecke (32) und, an letztere anschließend, eine Rohrfördervorrichtung (F) folgen, dadurch gekennzeichnet, daß das Formrollenpaar (24, 25), welches den unverlöteten mehrlagigen Rohrkörper (RK) und auch den Schwimmer (22) umgreift, zugleich das stromaufwärts angeordnete erste Kontaktrollenpaar mit der den Beginn der Erwärmungszone (Z) darstellenden ersten elektrischen Einspeisungsstelle (P1) bildet, daß ein bezüglich des ersten Kontaktrollenpaares (24, 25) stromabwärts angeordnetes zweites Kontaktrollenpaar (28, 29), welches die zweite elektrische Einspeisungsstelle (P2) und zugleich das Ende der Erwärmungszone (Z) bildet, mit einem Eigenantrieb (45) versehen ist und eine größere Umfangsgeschwindigkeit als das erste Kontaktollenpaar (24, 25) aufweist und daß die Fördergeschwindigkeit der Rohrfördervorrichtung (F) in Abhängigkeit von der im Bereich des zweiten Kontaktrollenpaares (28, 29) herrschenden Rohrvorschubgeschwindigkeit einstellbar ist.

2. Vorrichtung nach Anspruch 1, dadurch gekennzeichnet, daß im beiderseitigen Abstand zwischen dem ersten Kontaktrollenpaar (24, 25) und den zweiten Kontaktrollenpaar (28, 29) ein einen Eigenantrieb (45) aufweisendes mittleres Kontaktrollenpaar (26, 27) mit einer mittleren elektrischen Einspeisungsstelle (PM) vorgesehen ist, wobei die Vorwärmzone (ZV) zwischen der ersten (P1) und der mittleren (PM) Einspeisungsstelle und die Glühzone (ZG) zwischen der mittleren (PM) und der zweiten Einspeisungsstelle (P2) angeordnet sind.

3. Vorrichtung nach Anspruch 1 oder nach Anspruch 2, dadurch gekennzeichnet, daß alle Kontaktrollenpaar (24, 25; 26, 27; 28, 29) parallel bezüglich der Längsachse (bei x) des Rohrkörpers (RK) unverschieblich sind.

4. Vorrichtung nach Anspruch 3, dadurch gekennzeichnet, daß das mittlere Kontaktrollenpaar (26, 27) eine größere Umfangsgeschwindigkeit als das erste Kontaktrollenpaar (24, 25) und eine geringere Umfangsgeschwindigkeit als das zweite Kontaktrollenpaar (28, 29) aufweist.

5. Vorrichtung nach einem der Ansprüche 1 bis 4, dadurch gekennzeichnet, daß jeweils Oberrolle (24, 26, 28) und Unterrolle (25, 27, 29) der Kontaktrollenpaare (24, 25; 26, 27; 28, 29) mit einem Eigenantrieb versehen sind und daß Oberrolle und Unterrolle eines jeden Kontaktrollenpaares mit derselben Umfangsgeschwindigkeit umlaufen.

6. Vorrichtung nach einem der Ansprüche 1 bis 5, dadurch gekennzeichnet, daß die Kontaktrollenpaare (24, 25; 26, 27; 28, 29) und die Rohrfördervorrichtung (F) die Außenfläche des Rohrkörpers (RK; 10) schlupffrei, zumindest im wesentlichen schlupffrei, angreifen.

7. Vorrichtung nach einem der Ansprüche 1 bis 6, dadurch gekennzeichnet, daß die Antriebe der Kontaktrollenpaare (24, 25; 26, 27; 28, 29) und der Rohrfördervorrichtung (F) miteinander verriegelt.

8. Vorrichtung nach einem der Ansprüche 3 bis 7, dadurch gekennzeichnet, daß die Einspeisungsstellen (P1, PM, P2) mit Gleichstrom beaufschlagt und hierbei Vorwärmzone (ZV) und Glühzone (ZG) einander parallel geschaltet sind.

9. Vorrichtung nach Anspruch 8, dadurch gekennzeichnet, daß zur Regelung der den Einspeisungsstellen (P1, PM, P2) zugeführten elektrischen Leistung sowohl die elektrische Spannung als auch der elektrische Strom veränderbar sind.

10. Vorrichtung nach Anspruch 9, dadurch gekennzeichnet, daß zur Versorgung der Einspeisungsstellen mit geregelter elektrischer Leistung jeder Phase (R, S, T) eines elektrischen Drehstromtransformators (36) eine leistungsregelbare Thyristoranordnung (35) primärseitig (bei I) vorgeschaltet ist, daß sekundärseitig (bei II) jeder einzelnen Phase eine Gleichrichteranordnung (37, 38) nachgeschaltet ist und daß die drei Gleichstromphasen zur Beaufschlagung der Einspeisungsstellen (P1, PM, P2) auf zwei Anschlußklemmen (39, 40) zusammengeschaltet sind.

11. Vorrichtung nach Anspruch 10, dadurch gekennzeichnet, daß jede Thyristoranordnung pro Phase (R, S, T) zwei antiparallel geschaltete Thyristoren (35) enthält.

12. Vorrichtung nach Anspruch 10 oder nach Anspruch 11, dadurch gekennzeichnet, daß der Drehstromtransformator (36) im Dreieck geschaltet ist.

## Claims

1. Apparatus for manufacturing soldered multilayer metal pipes (10), with a rolling apparatus comprising several pairs of grooved rolls for the step-wise plastic forming of a level strip-type metal band (11) on the way via a slotted pipe to an initially unsoldered multilayer pipe body, which incorporates in a cross-sectional plane of the pair of grooved rolls encompassing it a calibrating mandrel, the so-called float (22), which, facing downstream in relation to the direction of advance of the pipe, is secured at the free end of a drag link (23) held three-dimensionally stable and drawn out of the slotted pipe, and with electric feed points, comprising contact rolls disposed at an axial distance from one another, of a conductive heating zone which comprises a pre-heating zone (ZV) and an incandescent zone (ZG) adjoining the latter downstream and followed by a cooling zone (32) and, adjoining the latter, a pipe conveying apparatus (F), characterised in that the pair of grooved rolls (24, 25) which encompass the unsoldered multilayer pipe body (RK) and also the float (22) form simultaneously the first pair of contact rolls disposed upstream with the first electric feed point (P1) representing the start of the heating zone (Z), that a second pair of contact rolls (28, 29) disposed downstream in relation to the first pair of contact rolls (24, 25), which form the second electric feed point (P2) and simultaneously the end of the heating zone (Z), are provided with their own drive (45) and exhibit a greater peripheral speed than the first pair of contact rolls (24, 25) and that the conveyance speed of the pipe conveyance apparatus (F) is adjustable as a function of the rate of advance of the pipe occurring in the vicinity of the second pair of contact rolls (28, 29).

2. Apparatus according to claim 1, **characterised in that** there is provided at a common distance between the first pair of contact rolls (24, 25) and the second pair of contact rolls (28, 29) a central pair of contact rolls (26, 27) comprising their own drive (45) with a central electric feed point (PM), wherein the pre-heating zone (ZV) is disposed between the first (P1) and the central (PM) feed point and the incandescent zone (ZG) is disposed between the central (PM) and the second feed point (P2).

3. Apparatus according to claim 1 or according to claim 2, **characterised in that** all the pairs of contact rolls (24, 25; 26, 27; 28, 29) are non-displaceable in parallel in relation to the longitudinal axis (at x) of the pipe body (RK).

4. Apparatus according to claim 3, **characterised in that** the central pair of contact rolls (26, 27) exhibit a greater peripheral speed than the first pair of contact rolls (24, 25) and a lesser peripheral speed than the second pair of contact rolls (28, 29).

5. Apparatus according to any one of claims 1 to 4, **characterised in that** upper roll (24, 26, 28) and lower roll (25, 27, 23) of the pairs of contact rolls (24, 25; 26, 27; 28, 29) are each provided with their own drive and that upper roll end lower roll of each individual pair of contact rolls rotate at the same peripheral speed.

6. Apparatus according to any one of claims 1 to 5, **characterised in that** the pairs of contact rolls (24, 25; 26, 27; 28, 29) and the pipe conveying apparatus (F) impinge on the outer surface of the pipe body (RK; 10) slippage-free, at least in the main slippage-free.

7. Apparatus according to any one of claims 1 to 6, **characterised in that** the drives of the pairs of contact rolls (24, 25; 26, 27; 28, 29) and of the pipe conveying apparatus (F) are interlocked with one another.

8. Apparatus according to any one of claims 3 to 7, **characterised in that** the feed points (P1, PM, P2) are supplied with direct current and in this case pre-heating zone (ZV) and incandescent zone (ZG) are connected parallel to one another.

9. Apparatus according to claim 8, **characterised in that** for the control of the electric power supplied to the feed points (P1, PM, 72) both the electric voltage and the electric current are variable.

10. Apparatus according to claim 8, **characterised in that** for the supplying of the feed points with controlled electric power there is connected upstream of each phase (R, S, T) of an electric three phase transformer (36) a power-controllable thyristor arrangement (35) on the primary side (at I), that on the secondary side (at II) there is connected downstream of each individual phase a rectifier arrangement (37, 38) and that the three direct current phases are for the supplying of the feed points (P1, PM, P2) interconnected on two terminals (39, 40).

11. Apparatus according to claim 10, **characterised in that** each thyristor arrangement contains per phase (R, S, T) two antiparallel connected thyristors (35).

12. Apparatus according to claim 10 or according to claim 11, **characterised in that** the three-phase transformer (36) is mesh-connected.

## Revendications

1. Dispositif de fabrication de tubes métalliques (10) multicouches, brasés, avec un dispositif de roulage présentant plusieurs paires de rouleaux de formage, pour former, étape par étape, en suivant un motif, une bande métallique (11) plane, du genre d'un ruban, en passant par un tube fendu et jusqu'à un corps tubulaire multicouche d'abord non brasé, qui entoure, dans un plan de section transversale de la paire de rouleaux de formage l'entourant, un mandrin de calibrage, ce que l'on appelle le flotteur (22), qui, vers l'aval, en considérant la direction d'avancement du tube, est fixé à l'extrémité libre d'une tige de remorquage (23) maintenue localement fixe, qui sort du tube fendu, et avec des points d'alimentation électrique, disposés à distance axiale les uns les autres, présentant des galets de contact, relatifs à une zone de chauffage par conduction, présentant une zone de préchauffage (ZV) et une zone d'incandescence (ZG) s'y raccordant en aval, que suivent une veine de refroidissement (32) et, se raccordant à cette dernière, un dispositif de transfert de tube (F), caractérisé en ce que la paire de rouleaux de formage (24, 25), qui entoure le corps tubulaire (RK) multicouche, non brasé, et également le flotteur (22), constitue en même temps la première paire de rouleaux de contact disposée en amont, le premier point d'alimentation électrique (P1) constituant le début de la zone de chauffage (Z), en ce qu'une deuxième paire de rouleaux de contact (28, 29), disposée en aval par rapport à la première paire de rouleaux de contact (24, 25), qui constitue le deuxième point d'alimentation électrique (P2) et en même temps la fin de la zone de chauffage (Z), est dotée d'un entraînement propre (45) et présente une vitesse périphérique supérieure à celle de la première paire de rouleaux de contact (24, 25), et en ce que la vitesse de transfert du dispositif de transfert de tube (F) est réglable en fonction de la vitesse d'avancement de tube régnant dans la zone de la deuxième paire de rouleaux de contact (28, 29).

2. Dispositif selon la revendication 1, caractérisé en ce qu'a distance, des deux côtés, entre la première paire de rouleaux de contact (24, 25) et la deuxième paire de rouleaux de contact (28, 29) est prévue une paire de rouleaux de contact médiane (26, 27) présentant un entraînement propre (45), avec un point d'alimentation électrique médian (PM), la zone de préchauffage (ZV) étant disposée entre le premier point d'alimentation (P1) et le point d'alimentation médian (PM) et la zone d'incandescence (ZG) étant disposée entre le point d'alimentation (PM) et le deuxième point d'alimentation (P2).

3. Dispositif selon la revendication 1 ou selon la revendication 2, caractérisé en ce que toutes les paires de rouleaux de contact (24, 25; 26, 27; 28, 29) sont indéplaçables parallèlement par rapport à l'axe longitudinal (x) du corps tubulaire (RK).

4. Dispositif selon la revendication 3, caractérisé en ce que la paire de rouleaux de contact médiane (26, 27) présente une vitesse périphérique supérieure à celle de la première paire de rouleaux de contact (24, 25) et une vitesse périphérique inférieure à celle de la deuxième paire de rouleaux de contact (28, 29).

5. Dispositif selon l'une des revendications 1 à 4, caractérisé en ce que chaque paire de rouleau supérieur (24, 26, 28) et de rouleau inférieur correspondant (25, 27, 28) des paires de rouleaux de contact (24, 25; 26, 27; 28, 29) est dotée d'un entraînement propre, et en ce que le rouleau supérieur et le rouleau inférieur de chaque paire de rouleaux de contact tournent à la même vitesse périphérique.

6. Dispositif selon l'une des revendications 1 à 5, caractérisé en ce que les paires de rouleaux de contact (24, 25; 26, 27; 28, 29) et le dispositif de transfert de tube de tube (F) appréhendent la face extérieure du corps tubulaire (RK; 10) sans glissement, au moins pratiquement sans glissement.

7. Dispositif selon l'une des revendications 1 à 6, caractérisé en ce que les entraînements des paires de rouleaux de contact (24, 25; 26, 27; 28, 29) et du dispositif de transfert de tube (F) sont verrouillés ensemble.

8. Dispositif selon l'une des revendications 3 à 7, caractérisé en ce que les points d'injection ou d'alimentation (P1, PM, P2) sont alimentés en courant continu et la zone de préchauffage (ZV), la zone d'incandescence (ZG) étant branchées électriquement en parallèle.

9. Dispositif selon la revendication 8, caractérisé en ce que tant la tension électrique qu'également l'intensité électrique sont modifiables pour assurer la régulation de la puissance électrique fournie aux points d'alimentation (P1, PM, P2).

10. Dispositif selon la revendication 9, caractérisé en ce qu'un dispositif à thyristors (35) réglable en puissance est branché en amont, côté primaire (en I), pour assurer l'alimentation des points d'alimentation en puissance électrique régulée de chaque phase (RST) d'un transformateur de courant électrique rotatif (36), en ce que, côté secondaire (en II) de chaque phase individuelle, est branché en aval un dispositif redresseur (37, 38) et en ce que les trois phases du courant continu sont branchées ensemble sur deux bandes de raccordement (38, 39) pour alimenter les points d'alimentation (P1, PM, P2).

11. Dispositif selon la revendication 10, caractérisé en ce chaque dispositif à thyristors contient par phase (R, S, T) deux thyristors (35) branches de façon antiparallèle.

12. Dispositif selon la revendication 10, ou selon la revendication 11, caractérisé en ce que le transformateur de courant rotatif (36) est branché en triangle.
